# FASCICULE DE BREVET EUROPEEN

(11) **EP 0 596 040 B1**
(45) Date de publication et mention de la délivrance du brevet: **19.04.1995**
(21) Numéro de dépôt: 92918304.4
(22) Date de dépôt: 13.08.1992
(51) Int. Cl.: F16L 55/10, E21B 29/08

(54) **DISPOSITIF DE COUPURE D'UNE CANALISATION POUR ARRETER LA CIRCULATION D'UN FLUIDE**
SCHNEIDEVORRICHTUNG FÜR EINE ROHRLEITUNG ZUM ABSPERREN DES FLUIDFLUSSES
DEVICE FOR CUTTING A PIPE IN ORDER TO STOP A FLUID FLOW

(30) Priorité: 13.08.1991 FR 9110290
(43) Date de publication de la demande: 11.05.1994
(73) Titulaire: SOCIETE CIVILE D'INVENTION POUR LA GESTIONE DES BREVETS CANTALOUBE, F-12310 Laissac (FR)
(72) Inventeur: CANTALOUBE, Elie, F-12310 Laissac (FR); CANTALOUBE, Yves, F-12310 Laissac (FR)
(74) Mandataire: Puiroux, Guy
(86) Numéro de dépôt international: FR9200792
(87) Numéro de publication internationale: WO9304312

(56) Documents cités:
- US-A- 2 984 129
- US-A- 3 603 387
- US-A- 4 516 598

## Description

La présente invention a pour objet un dispositif permettant d'intervenir sur des canalisations de tous types telles que tubes, tuyaux, oléoducs et autres conduites assurant le transport de fluides à températures et pressions quelconques. de façon à assurer l'arrêt de la circulation en un point quelconque, notamment en cas d'incident grave et ceci en assurant pendant toute l'opération de mise en place, de coupure de la canalisation et de fermeture, une totale étanchéité.

De tels dispositifs trouvent bien entendu leurs applications dans tous les cas d'urgence où il faut établir une sécurité suite à un accident, une explosion, un incendie, un attentat, ou tout autre cas où l'on ne peut plus maîtriser l'arrêt du débit dans une canalisation.

L'art antérieur connaît des dispositifs de ce type: par exemple. le brevet Américain 3 603 387 (SCHOEFFLER), est décrit un dispositif de coupure d'une canalisation, que l'on peut commander à une certaine distance et présentant un carter enserrant la canalisation, une lame de scie tournant et avançant dans le carter, munie d'un disque abrasif qui aplanit la section de la conduite côté amont pour assurer l'étanchéité grâce à des organes du type vérins qui sollicitent la lame vers l'amont à l'encontre de la poussée du fluide circulant dans la conduite pour appliquer la lame contre la section amont de ladite canalisation et assurer l'étanchéité. Ce dispositif présente l'inconvénient majeur d'obliger la lame à résister à la pression fluide alors qu'elle ne repose que ponctuellement sur les vérins, lesquels travaillent à pleine charge, de sorte que la défaillance de l'un quelconque des vérins peut entraîner la rupture de l'ensemble.

Les dispositifs conformes à l'invention trouvent en particulier leurs applications dans le cas des puits de pétrole en feu. Dans l'art antérieur, dans ce dernier cas, on utilise d'abord des dispositifs d'extinction par soufflage, notamment par explosion, pour éteindre l'incendie puis on intervient généralement par des forages latéraux pour détourner le flux vers une autre zone neuve présentant tout l'équipement nécessaire pour maltriser le débit.

Dans le cas général de canalisations, on intervient généralement en amont de la zone où s'est produit l'incident, à l'emplacement où se situe la première vanne ou autre dispositif d'arrêt du débit, mais ceci n'empêche pas l'écoulement de tout le fluide se trouvant entre la zone où se produit l'incident et la zone où l'on peut assurer la fermeture.

Dans tout les cas, il est important de pouvoir arrêter le plus rapidement possible le débit de fluide à l'endroit le plus proche possible de la zone où s'est produit l'incident, dans les limites bien entendu, où les conditions extérieures de température et de pression permettent l'approche des opérateurs nécessaires. Comme on le verra ci-après. il est évidemment possible de prévoir la pose des dispositifs de l'invention préalablement à l'incident, ce qui est possible dans les cas où l'on veut modifier une installation, par exemple, pour introduire une dérivation ou un branchement complémentaire sur une canalisation.

Il est également possible d'envisager une pose automatisée à l'aide de robots à télécommande ou à commande numérique ou autre. effectuant les mêmes opérations que les opérateurs, telles qu'elles vont être décrites ci-dessous.

La présente invention concerne en particulier un dispositif de coupure d'une canalisation de transport de fluide pour l'arrêt de la circulation en un point quelconque, tel que décrit dans la revendication 1.

Pour mieux faire comprendre les caractéristiques techniques et les avantages de la présente invention on va en décrire des exemples de réalisations étant bien entendu que ceux-ci ne sont pas limitatifs quant à leur mode de mise en oeuvre et aux applications que l'on peut en faire. On se reportera aux figures suivantes qui représentent:
la figure 1, une vue perspective écorchée sur un dispositif conforme à la présente invention,
la figure 2, une coupe axiale sur un système de butée pour un dispositif tel celui de la figure 1.

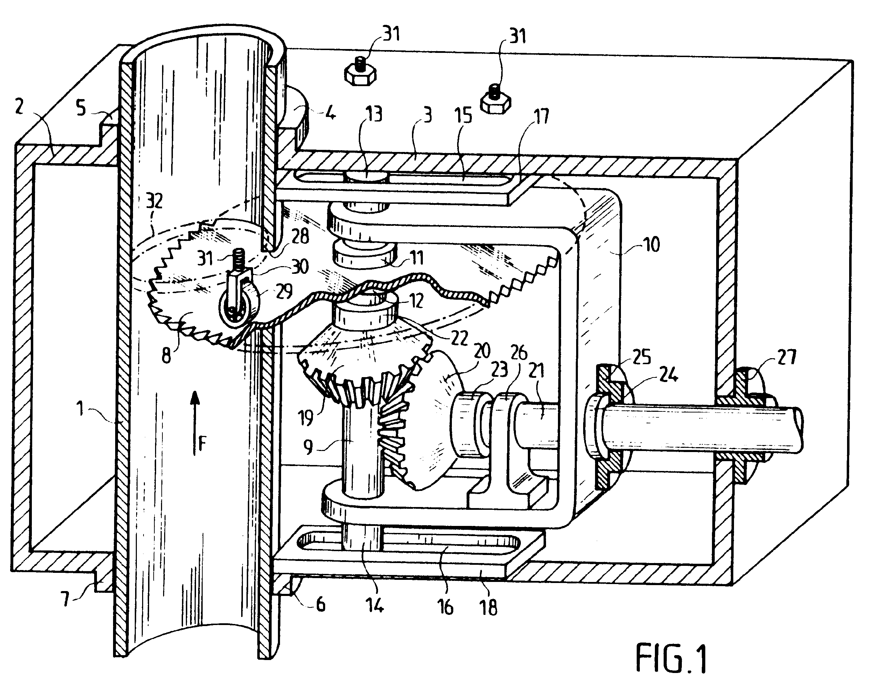

Dans un premier exemple de réalisation pour lequel on se reportera à la figure 1, la conduite est désignée par la réference 1. Cette conduite peut être en tout matériau et en particulier en métal, en alliage ou en matière plastique. L'essentiel du dispositif est inclus dans un carter comprenant deux parties 2 et 3 que l'on vient assembler de part et d'autre de la conduite 1 grâce à des dispositifs tels que les collerettes 4,5,6 et 7 que l'on fixe à la conduite 1 par tout moyen adéquat qui déprendra essentiellement des pressions en jeux et de la nature des matériaux. On peut se contenter de colliers de serrage ou de boulons de fixation, mais on peut également être amené, en cas de pressions élevées, à souder les deux parties 2 et 3 du carter entre elles et, si besoin est, sur la conduite 1. L'ensemble du carter formé par les deux éléments 2 et 3 est, par exemple, de forme générale parallélèpipédique sans que cela constitue une nécessité puisqu'il suffit essentiellement de protéger l'ensemble du mécanisme qui sera décrit ci-dessous et d'assurer l'étanchéité.

L'élément essentiel du dispositif est constitué par une scie circulaire 8 tournant autour d'un axe matérialisé par l'arbre 9, de préférence parallèle à l'axe de la conduite 1. On. peut également, dans certains cas, envisager un axe 9 qui ne soit pas parallèle à l'axe de la conduite 1 ce qui, au lieu de faire décrire à la scie circulaire un plan de section droite comme sur la figure 1 peut lui faire décrire un plan incliné. De telles dispositions pourront être choisies par l'homme de l'art en fonction des caractéristiques du fluide c'est-à-dire sa pression. ses différentes caractéristiques de vitesses, sa viscosité, sa nature, etc... L'arbre 9 est monté à rotation dans une pièce fourchue en U 10, munie des paliers nécessaires non représentés sur la figure. La scie circulaire 8 est fixée sur l'arbre 9 par tous moyens adéquats tels que des colliers classiques 11 et 12 ou par tous autres moyens tels ceux énumérés plus loin. Les extrémités 13 et 14 de l'arbre 9 passent à travers les deux bras de la pièce en U 10 pour pénétrer dans les ouvertures oblongues 15 et 16 de deux pièces 17 et 18 fixées sur la partie 3 du carter de part et d'autre de la pièce en U 10. De la sorte lorsque la pièce en U 10 sera animée d'un mouvement de translation, comme on le verra par la suite, les extrémités 13 et 14 de l'arbre 9 coulissent dans les ouvertures 15 et 16, ce qui permet une avancée progressive en translation de la scie circulaire 8 tournant sur son axe 9 à travers la conduite 1. comme on le voit sur la figure 1. La scie circulaire 8 et l'arbre 9 sont entraînées en rotation, selon un mode de réalisation préféré de l'invention, par des pignons coniques 19 et 20 respectivement fixés sur l'arbre 9 et sur un arbre transversal 21 grâce à des moyens adéquats tels des cannelures longitudinales internes des pignons en prise avec des cannelures correspondantes externes des arbres 9 et 21. Le fait que ces pignons engrênent permet, grâce à la rotation de l'arbre 21 entraînant celle du pignon 20, d'entraîner le pignon 19. l'arbre 9 et la scie circulaire 8 fixée par la bague 11. Pour empêcher l'arbre 21 de se déplacer en translation par rapport à la pièce en U 10, il présente un élargissement ou une bague 24 maintenue en position contre la pièce en U 10 grâce à un chapeau 25 fixé sur la pièce en U10 par tout moyen adéquat. La pièce 10 et le chapeau 25 sont munis de tout dispositif de lubrification ou de palier non représenté sur la figure unique, par simplification. Pour que l'arbre 21 reste bien en position dans la pièce en U 10, peut être prévu un palier 26 fixé sur l'une des ailes de la pièce 10 par tout moyen adéquat au voisinage du pignon 20. Ce guidage joue également un rôle important dans la translation de la pièce en U 10 et de tout le mécanisme qui vient d'être décrit lors de l'avancement de la scie circulaire 8 à travers la conduite 1. En effet il évite que la pièce 10 se déplace selon un mouvement qui ne soit pas une simple translation, il permet également que l'arbre 21 reste en position correcte par rapport à l'arbre 9 c'est-à-dire que de préférence leurs axes restent concourants, les pignons 19 et 20 restant correctement engrenés pour assurer un parfait entraînement de l'arbre 9 et de la scie circulaire 8. L'arbre 21 traverse la partie 3 du carter grâce à une bague palier 27.

L'arbre 21 doit être entraîné en rotation par tout moteur classique. Il doit pouvoir également être déplacé en translation de façon à assurer l'avancement de la pièce 10, du mécanisme qu'elle supporte et de la scie circulaire 8 qui doit traverser toute la section de la conduite 1. Pour assurer à la fois le mouvement de rotation et de translation il est possible de prévoir entre le moteur non représenté sur la figure et l'arbre 21, un entraînement coulissant par cannelure ou équivalent, un épaulement ou une bague solidaire de l'arbre 21 permettant à tout dispositif classique par exemple du type vérin d'assurer l'avancement progressif de l'équipage mobile.

Comme on l'a indiqué plus haut il est évident que l'homme de l'art va choisir des matériaux et des dimensionnements qui vont dépendre essentiellement de la nature et des caractéristiques de la conduite 1 ainsi que de la nature et des caractéristiques physico-chimiques du fluide qui s'y déplace. En ce qui concerne le carter 2,3, il peut être réalisé par exemple en tôle d'acier soudé et la fixation des deux parties 2 et 3 entre elles ainsi que leur fixation sur la conduite 1 peut s'effectuer comme il a été dit ci-dessus ou selon un mode de réalisation préféré de l'invention en remplaçant les demi-collerettes 4,5,6 et 7 par des bagues circulaires à sections en équerre rapportées sur les parties 3 et 4. Les dimensions et notamment les épaisseurs de ces différents éléments vont dépendre bien évidemment, essentiellement des pressions et des contraintes en jeux.

En ce qui concerne la scie circulaire 8 elle est de préférence montée sur l'arbre 9 en acier doux et la bague 11 peut affecter la forme d'un raidisseur cylindrique assurant une bonne orthogonalité entre le plan général de la scie 8 et son arbre d'entraînement 9. La partie désignée par 12 est formée par un épaulement de l'arbre 9.

On choisira la scie circulaire avec des formes de dents qui ne donnent de la voie que sur le côté qui reçoit la pression du fluide qui sur la figure 1 se déplace dans le sens de la flèche F. Sur la figure 1 les dents ont été très schématiquement représentée. Les dents doivent donc donner de la voie du côté amont du fluide, tandis que du côté aval la surface de la lame doit être totalement plane de façon à venir s'appliquer sous l'effet de la pression contre la partie 28 de la conduite 1 qui a été sciée ce qui assure l'étanchéité entre l'amont et l'aval. Il est possible bien entendu qu'une partie du fluide passe dans le carter 2 et 3 notamment si sa viscosité est très faible et le choix des matériaux utilisés des dispositifs d'étanchéité et de lubrification ou d'auto-lubrification doit tenir compte de la nature du fluide.

Il est évident que l'épaisseur de la scie circulaire doit tenir compte de la pression, des vitesses de la viscosité du fluide et du diamètre intérieur de la conduite 1. Lorsque les contraintes hydrauliques sont importantes il est nécessaire bien entendu d'augmenter l'épaisseur de la scie 8 qui peut prendre l'aspect d'une fraise, mais on peut également prévoir des éléments d'appui tel que des roulements à billes comme celui désigné par 29 monté dans une fourchette 30 fixée sur la paroi de la partie du carter 2 ou 3 par exemple par boulonnage 31. On peut également prévoir des butées à billes à axes parallèles à l'axe 9 et venant s'intercaler entre la scie circulaire 8 et la paroi 3 à l'aide de cales éventuelles.

Les roulements à billes peuvent être remplacés par tous dispositifs à galets ou autres systèmes plus simples éventuellement à friction dans la mesure ou un dispositif tel que celui faisant l'objet de la présente invention peut n'avoir à servir qu'une seule fois, ce qui peut donc amener l'homme de l'art à choisir des solutions plus robustes le temps de l'intervention. Des éléments telles que les fourchettes 30 peuvent être fixées à la partie supérieure des éléments de carter 2 et 3 grâce, par exemple, au système de boulonnage 31 un chapeau recouvrant chaque boulonnage de façon à assurer l'étanchéité puisque comme cela a été souligné plus haut il est possible surtout, avec un fluide à basse viscosité, qu'il pénètre dans la chambre constituée par les deux éléments de carter 2 et 3 ce qui met l'ensemble du carter sous une pression qui tend à être égale à celle dans la conduite 1, pression qui risque d'autant plus d'augmenter que la fermeture grâce à la scie est plus rapide et que la dynamique du fluide peut augmenter considérablement les contraintes de pression au moment de la fermeture. Les extrémités 13 et 14 de l'arbre 9 coulissant dans les ouvertures oblongues 15 et 16 des pièces 17 et 18, celles-ci seront de préférence réalisées en un matériau se prêtant facilement à la friction tel qu'en bronze de façon à constituer un chemin de glissement particulièrement adéquat.

L'arbre 9 monté à rotation dans la pièce en U formant fourche 10 peut l'être grâce à des paliers non représentés sur la figure qui peuvent être de simples bagues en bronze ou autre alliage de friction.

Le système de bagues 24 et 25 qui assure la non translation de l'arbre 21 par rapport à la pièce en fourche 10 permet l'avancement de l'équipage mobile, mais peut également en permettre le retrait. Ces bagues peuvent être également réalisées en bronze. La bague 27 d'entrée de l'arbre 21 dans la partie de carter 3 peut comporter de préférence un presse-étoupe ou autre dispositif d'étanchéité pour résister à la pression du fluide pouvant régner dans l'enceinte du carter.

Le fonctionnement du dispositif est le suivant: on peut bien entendu l'utiliser à titre préventif c'est-à-dire le monter au départ sur toute canalisation à risque pouvant devenir d'accès difficile en cas d'avarie; c'est évidemment le cas lorsqu'il s'agit de puits de pétrole risquant de donner lieu à incendie et créant une source des chaleur telle qu'il est difficile et de se livrer à des travaux à proximité. Dans le cas des puits de pétrole, il est possible, si le dispositif n'a pas été mis en place préalablement à toute exploitation, de s'approcher grâce à un tunnel que l'on ventile au fur et à mesure de façon à accéder sous le sol à une certaine distance de la surface dans une zone à température plus supportable ce qui peut être amélioré par une ventilation particulièrement efficace. On peut alors prévoir un avancement de l'ensemble du dispositif sur un chariot.

Il est évident que le montage est beaucoup plus simple lorsqu'il s'agit d'une canalisation à l'air libre accessible dans des conditions normales de températures et de pressions extérieures.

On commence par monter les deux éléments de carter 2 et 3 sur la conduite 1 grâce aux collerettes 4,5,6 et 7 et en assurant la fixation des éléments 2 et 3 entre eux et leur fixation sur le la conduite 1 comme il a été dit plus haut. Dans l'élément de carter 3 est monté au départ l'ensemble des pièces 9 à 31. Au départ, les éléments de carter doivent être disposés de sorte que la scie circulaire 8 soit montée de façon que sa face plane se trouve du côté aval de la circulation du fluide et que les éléments de butée ou de support tel que 29,30,31 se trouvent également du côté aval pour maintenir la scie circulaire 8 à l'encontre de la pression hydrostatique du fluide représentée par la flèche F sur la figure 1. La scie circulaire est au départ en position totalement rétractée, c'est-à-dire que les extrémités 13 et 14 de l'arbre 9 se trouvent à l'extrémité droite de la figure dans les coulisseaux 15 et 16. La pièce 10 formant fourche en U est également totalement poussée vers la droite dans l'élément de carter 3 et l'arbre 21 fait saillie au maximum vers le moteur situé à l'extérieur non représenté. On déclenche la rotation du moteur, ce qui entraîne en rotation l'arbre 21. le pignon conique 20, le pignon conique 19, l'arbre 9, la bague 11 et la scie circulaire 8. Le chemin qui devra être parcouru par la scie circulaire 8 doit être supérieur au diamètre extérieur de la conduite 1 de sorte que l'espace situé entre la périphérie de la scie circulaire 8 et la bague 11 doit être supérieure à ce diamètre extérieur du tube 1. Ceci va correspondre également à la distante d'avancement de l'équipage mobile 10 et de toutes les pièces qu'il comprend. Cela définit donc de plus la longueur des coulisseaux 15 et 16 et l'espace nécessaire à l'intérieur de la partie de carter 3 de façon à permettre l'avancement complet du dispositif depuis la position de départ totalement à droite sur la figure jusqu'à ce que la scie circulaire ait totalement traversé le tube 1 découpant ainsi ce dernier selon le pointillé 32. Il est évident qu'une fois que le dispositif conforme à la présente invention représentée à la figure 1 est arrivé en position d'arrêt c'est-à-dire que la lame de scie circulaire obture totalement une section transversale de la conduite 1, il est possible de rétablir la circulation du fluide en rétractant l'ensemble de l'équipage mobile monté sur la pièce 10, par rétraction des vérins ou autres dispositifs ayant servi à assurer l'agencement de l'ensemble. Il est possible donc de laisser l'ensemble du carter et son contenu en place, par exemple en soudant le carter sur la conduite 1, de façon éventuellement à resservir une autre fois au méme endroit, cette fois-ci sans avoir à découper à nouveau la section 32 de la conduite 1 puisque dès lors, la lame ne sert plus que d'élément de vanne transversale; toutefois une rotation peut réduire des frottements et assurer une mise en place plus facile de l'ensemble.

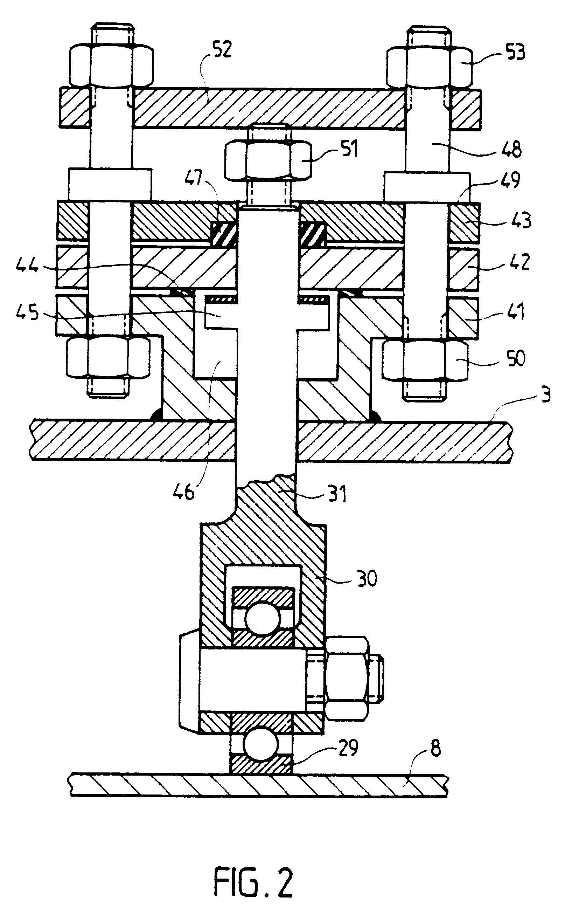

Il est également possible, comme représenté à la figure 2, de monter les butées de façon a assurer un parfait guidage de la lame pendant le sciage et son orthogonalité par rapport à l'axe de la conduite. Le galet à billes ou à rouleaux 29 est monté à rotation dans l'étrier 30, comme à la figure 1, solidaire de l'extrémité de la tige filetée 31. Sur le carter 3, est soudée une pièce 41 en forme générale de coupelle à collerette périphérique et à rond plat. La tige 31 traverse carter 3 et coupelle 41 ainsi que deux plaques 42 et 43.La première, 42 s'applique contre la collerette périphérique de la coupelle 41 grâce à un joint d'étanchéité 44. La tige 31 traverse également les deux plaques 42 et 43 et présente une partie 45 de diamètre plus large qui forme double épaulement et est emprisonnée dans l'espace 46 ainsi ménagé entre coupelle 41 et plaque 42 ce qui limite les mouvements de coulissement de la tige 31. On notera que coupelle 41 et plaque 42 peuvent être liées, voire soudées, entre elles. La plaque 43 est serrée contre la plaque 42 comme on le verra ci-après , et présente en son centre une garniture d'étanchéité 47 insérée dans un alésage correspondant entourant la tige 31. Un certain nombre de tiges filetées 48 sont disposées autour de la tige 31, parallèlement à cette dernière, et traversent la collerette de la coupelle 41 et les plaques 42 et 43. Elles présentent un épaulement 49 qui vient s'appuyer sur la plaque 43 et l'ensemble est serré par l'écrou 50, ce qui assure l'étanchéité autour de la tige 31. La partie supérieure de la tige 31 présente un écrou 51, et vient buter contre une plaque 52 enfilée sur les parties supérieures des tiges filetées 48, sur lesquelles sont vissés les écrous 53. Agir sur ces derniers permet de repousser le galet 29 vers le bas, et l'écrou 51 à le remonter. Les organes de butée/support 29,30,31 peuvent donc se déplacer entre une position de butée et de maintien de la lame, et une position de libération de la lame. On conçoit que moins la lame de scie est épaisse plus elle est flexible, et mieux il faut la guider grâce aux galets 29 pour assurer un sciage plan. Il est évident que l'utilisation d'une lame plus proche de la fraise épaisse évite la flexibilité, mais dans la phase suivant le sciage, c'est-à-dire celle où la lame vient s'appliquer sur la face aval de la conduite, une certaine souplesse peut améliorer l'étanchéité,la pression du fluide appliquant la lame contre cette face aval sciée et compensant d'éventuelles irrégularités. Dans ce cas, en fin de sciage, on dévisse les écrous 53 pour dégager la tige 31 et on serre l'écrou 51 pour relever le galet 29.

Dans une variante de l'exemple précédent on peut introduire les caractéristiques suivantes :
on peut prévoir un système par exemple d'ergots et de trous entre les deux éléments de carter 2 et 3 de façon à faciliter le repérage lors de leur mise en place.

Dans une variante il est également possible de prévoir une ouverture fermée par un système de bouchage étanche dans l'un des éléments du carter de façon à le remplir d'un lubrifiant adéquat avant sa mise en fonctionnement, ce qui limite bien entendu l'entrée de fluide de la conduite 1 vers l'enceinte formée par les éléments de carter 2 et 3.

Cette ouverture, munie d'un tuyau et d'une vanne non représentés sur la figure, peut servir également à évacuer le fluide, notamment à l'aide d'une pompe, pour éviter sa remontée éventuelle et faciliter ainsi la réparation de la partie détruite hors-sol.

Il est possible compte tenu des caractéristiques technique de la conduite 1 que l'on ne puisse monter l'ensemble du dispositif conforme à l'invention en porte à faux sur la canalisation et qu'il soit nécessaire de prévoir des béquilles ou autres supports réglables pour éviter d'apporter au tube des contraintes inutiles d'autant plus que le tube va être coupé en deux éléments séparés.

Dans le cas ou il s'agit d'un puits de pétrole présentant un tubage "tubing" à tube concentrique on peut fixer sur le carter au moins un ensemble guide-forêt qui perce de part en part le premier tube et le second et les maintient donc en place de façon qu'il n'y ait pas de déplacement relatif entre les deux lors de l'avancement de la scie circulaire et également lors de son retrait. Cette disposition permet également d'éviter que, lors de la mise en place d'une vanne hors-sol sur le tubage, la pression soulève le tube après le retrait de la lame 8 dans le carter 3.

On notera également que des dispositifs conformes à l'invention peuvent être réalisés pour chaque diamètre et/ou matériau de tube d'autant plus qu'il existe des normes précises limitant le nombre de cas. Mais un tel dispositif prévu pour un diamètre donné peut être utilisé avec des diamètres plus faibles de tubes. Il suffit de rajouter aux parties 2 et 3 de carter des éléments de demi-bagues ou collerettes soudées ou fixées par tout moyen adéquat, correspondant au diamètre du tube à scier.

## Revendications

1. Dispositif de coupure d'une canalisation (1) de transport de fluide pour l'arrêt de la circulation en un point quelconque, comprenant un carter (2,3) susceptible d'être monté de façon étanche sur ladite canalisation (1), ledit carter (2,3) contenant au moins une lame de scie circulaire (8) entraînée en rotation et en translation de façon à scier la canalisation (1) transversalement, cette lame de scie (8) constituant alors une surface d'arrêt de ladite circulation selon le plan de section (28) par la lame de scie, caractérisé par le fait que les dents de la lame de scie (8) sont planes du côté aval de la circulation du fluide dans la canalisation (1) et elles donnent de la voie du côté amont de ladite circulation dans la canalisation (1), de telle façon que la surface aval plane de la lame de scie (8) soit appliquée d'une manière étanche sur la partie sciée (28), du côté aval, de la canalisation (1).

2. Dispositif suivant la revendication 1 -caractérisé par le fait que des éléments de butée/support (29,30,31) sont disposés dans le carter (2,3), du côté aval, et sont en contact avec la surface aval plane de la lame de scie (8) pour maintenir cette lame (8) à l'encontre des forces hydrostatiques du fluide circulant dans la canalisation (1) pendant l'opération de coupe.

3. Dispositif suivant la revendication 2 caractérisé par le fait que les éléments de butée/support (29,30,31) sont agencés de manière à pouvoir se déplacer entre une position de butée et de maintien de la lame de scie (8) et une position de libération de cette lame (8).

4. Dispositif suivant la revendication 2 caractérisé par le fait que les éléments de butée/support (29,30,31) comprennent un galet (29) monté à rotation sur l'extrémité d'une tige filetée (31) coulissante et réglable.

5. Dispositif suivant l'une quelconque des revendications précédentes appliqué à un tubage à tubes concentriques caractérisé en ce qu'il comprend un ensemble guide-forêt fixé sur le carter (2, 3) et qui perce de part en part le premier tube et le second et les maintient donc en place de façon qu'il n'y ait pas de déplacement relatif entre les deux lors de l'avancement de la lame de scie circulaire (8) et également lors de son retrait.

## Patentansprüche

1. Vorrichtung zum Schneiden einer ein Fluid transportierenden Rohrleitung (1), um den Durchfluß an einer beliebigen Stelle zu unterbrechen, aufweisend: ein Gehäuse (2, 3), das in dichter Weise auf die Rohrleitung (1) montiert werden kann und mindestens ein Kreissägeblatt (8) enthält, das in eine Rotations- und Translationsbewegung versetzt wird, um die Rohrleitung (1) in Querrichtung zu durchsägen, wobei dieses Sägeblatt (8) dann eine Durchflußsperrfläche entlang der durch das Sägeblatt gebildeten Schnittebene (28) bildet, **dadurch gekennzeichnet, daß** die Zähne des Sägeblatts (8) auf der Seite, die in Richtung stromabwärts zum Fluidstrom in der Rohrleitung (1) gerichtet ist, eben sind und auf der Seite in Richtung stromaufwärts zum Fluidstrom in der Rohrleitung (1) verschränkt sind, derart daß die stromabwärts gerichtete, ebene Fläche des Sägeblatts (8) in dichter Weise auf dem stromabwärts gerichteten, gesägten Bereich (28) der Rohrleitung (1) zu liegen kommt.

2. Vorrichtung nach Anspruch 1, **dadurch gekennzeichnet, daß** die Anschlags/Abstützelemente (29, 30, 31) im Gehäuse (2, 3) auf der stromabwärts gerichteten Seite angeordnet sind und in Kontakt mit der stromabwärts gerichteten, ebenen Fläche des Sä blatts (8) sind, um dieses Blatt (8) während des Schneidvorgangs gegen die hydrostatischen Kräfte des in der Rohrleitung (1) zirkulierenden Fluids abzustützen.

3. Vorrichtung nach Anspruch 2, **dadurch gekennzeichnet, daß** die Anschlags/Abstützelemente (29, 30, 31) derart angeordnet sind, daß sie zwischen einer Anschlagposition und Stützposition für das Sägeblatt (8), und einer Position, in der dieses Blatt (8) freigegeben ist, bewegt werden kann.

4. Vorrichtung nach Anspruch 2, **dadurch gekennzeichnet, daß** die Anschlags/Abstützelemente (29, 30, 31) ein Wälzlager (29) aufweisen, welches drehbar am Ende eines verschieblichen und einstellbaren, mit Gewinde versehenen Schafts (31) befestigt ist.

5. Vorrichtung nach einem der vorstehenden Ansprüche, die für einen Röhrenstrang aus konzentrischen Röhren verwendet wird, **dadurch gekennzeichnet, daß** sie eine am Gehäuse (2, 3) befestigte Bohrführungsanordnung aufweist, welche das erste Rohr und das zweite Rohr von einer Seite zur anderen durchdringt und diese auf diese Weise derart auf ihrem Platz fixiert, daß keine Relativbewegung zwischen diesen beiden im Verlauf des Vorschiebens und des Zurückfahrens des Kreissägeblatts (8) auftritt.

## Claims

1. Device for cutting a fluid-transporting pipe (1) for stopping the circulation at any point, comprising a casing (2, 3) capable of being hermetically mounted on said pipe (1), said casing (2, 3) containing at least one circular saw blade (8) driven in rotation and in translation so as to saw the pipe (1) transversely, this saw blade (8) then constituting a surface for stopping said circulation along the plane of section (28) by the saw blade, characterized in that the teeth of the saw blade (8) are plane downstream of the circulation of the fluid in the pipe (1) and the teeth are set upstream of said circulation in the pipe (1), so that the plane downstream surface of the saw blade (8) is applied hermetically on the sawn part (28), downstream, of the pipe (1).

2. Device according to Claim 1, characterized in that stop/support elements (29, 30, 31) are disposed in the casing (2, 3), downstream, and are in contact with the plane downstream surface of the saw blade (8) in order to maintain this blade (8) against the hydrostatic forces of the fluid circulating in the pipe (1) during the cutting operation.

3. Device according to Claim 2, characterized in that the stop/support elements (29, 30, 31) are arranged so as to be able to move between a position for stop and hold of the saw blade (8) and a position for release of this blade (8).

4. Device according to Claim 2, characterized in that the stop/support elements (29, 30, 31) comprise a roller (29) mounted to rotate on the end of a sliding, adjustable, threaded rod (31).

5. Device according to any one of the preceding Claims applied to tubing with concentric tubes, characterized in that it comprises a drill-guide assembly fixed on the casing (2, 3) and which pierces right through the first tube and the second and therefore maintains them in place so that there is no relative displacement between the two during advance of the circular saw blade (8) and likewise during its withdrawal.
